# EUROPÄISCHE PATENTANMELDUNG

(11) **EP 1 843 590 A1**
(43) Veröffentlichungstag der Anmeldung: **10.10.2007**
(21) Anmeldenummer: 07105487.8
(22) Anmeldetag: 02.04.2007
(51) Int. Cl.: H04N 7/18

(54) **Hauskommunikationsanlage sowie Video-Wohnungsstation**

(30) Priorität: 05.04.2006 DE 202006005483 U
(71) Anmelder: GIRA Giersiepen GmbH & Co. KG, 42477 Radevormwald (DE)
(72) Erfinder: DORNSEIFF, André, 51688, Wipperfürth (DE); HEINBACH, Hartmut, 57080, Siegen (DE)
(74) Vertreter: Patentanwälte Dr. Solf & Zapf

(57) **Zusammenfassung**

Die vorliegende Erfindung betrifft eine Hauskommunikationsanlage mit mindestens einer Türstation (2) und mindestens einer Wohnungsstation (4, 4a). Alle Stationen (2, 4, 4a) sind über einen gemeinsamen Zweidraht-Bus (6) verbunden oder verbindbar, der zur Übertragung von Steuer-, Audio- und Videosignalen ausgelegt ist. Die Wohnungsstation (4) weist einen Audioteil (12) für eine Audio-Kommunikation mit der Türstation (2) sowie einen Videoteil (16) mit einem Display (20) zur Darstellung eines Videobildes einer Videokamera (18) der Türstation (2) anhand eines über den Bus (6) zu übertragenden Videosignals auf. Die Wohnungsstation weist (4) einen TV-Eingang (22) zur Einspeisung eines aus Audio-und Videokomponenten bestehenden TV-Signals (AV) sowie Mittel zum Aktivieren eines Fernsehbetriebes und zur Wiedergabe des TV-Signals (AV) über den Audioteil (12) und den Videoteil (16) auf.

## Beschreibung

Die vorliegende Erfindung betrifft eine Hauskommunikationsanlage mit mindestens einer Türstation und mindestens einer Wohnungsstation, wobei alle Stationen über einen gemeinsamen Zweidraht-Bus verbunden oder verbindbar sind, der zur Übertragung von Steuer-, Audio- und Videosignalen ausgelegt ist, wobei die Wohnungsstation einen Audioteil für eine Audio-Kommunikation mit der Türstation sowie einen Videoteil mit einem Display zur Darstellung eines Videobildes einer Videokamera der Türstation anhand eines über den Bus zu übertragenden Videosignals aufweist.

Weiterhin betrifft die Erfindung auch eine Video-Wohnungsstation für eine solche Hauskommunikationsanlage und zum Anschluss an einen Zweidraht-Bus zwecks Verbindung zumindest mit einer eine Videokamera aufweisenden Video-Türstation, mit einem Audioteil für eine Audio-Kommunikation mit der Türstation sowie mit einem Videoteil mit einem Display zur Darstellung eines Videobildes der Videokamera der Türstation anhand eines über den Bus übertragenen Videosignals.

Eine zur Audio- und Videoübertragung geeignete Hauskommunikationsanlage der genannten Art ist zum Beispiel in der EP 1 320 244 A1 beschrieben. Bei solchen Video-Hauskommunikationsanlagen mit Zweidraht-Bustechnik wird das Videosignal derart frequenzmoduliert, dass es außerhalb (oberhalb) einer für das menschliche Ohr hörbaren Audio-Frequenz liegt, um Beeinträchtigungen der Audio-Sprechverbindungen zu vermeiden. Dadurch kann das Videosignal in der Wohnungsstation nicht unmittelbar auf dem Display wiedergegeben werden, sondern die Wohnungsstation muß mit einem Demodulator ausgestattet sein, der das Videosignal zur Darstellung auf dem Display zunächst demoduliert.

Der vorliegenden Erfindung liegt die Aufgabe zugrunde, eine solche Anlage sowie eine Wohnungsstation mit erweiterten Nutzungsmöglichkeiten zu schaffen.

Erfindungsgemäß wird dies durch die Merkmale des Anspruchs 1 bzw. des Anspruchs 6 erreicht. Vorteilhafte Ausgestaltungsmerkmale sind Gegenstand der abhängigen Ansprüche.

Erfindungsgemäß weist somit die (mindestens eine) Wohnungsstation einen TV-Eingang zur Einspeisung eines aus Audio- und Videokomponenten bestehenden TV-Signals sowie Mittel zum Aktivieren eines Fernsehbetriebes und zur Wiedergabe des TV-Signals über den Audioteil und den Videoteil auf. Dadurch kann vorteilhafter Weise die Wohnungsstation - zusätzlich zu ihrer normalen Funktion als Video-Türsprechgerät - auch zum Fernsehen genutzt werden, indem ihr über ihren zusätzlichen TV-Eingang und praktisch "an ihrem Demodulator vorbei" ein übliches TV-Signal - insbesondere ein FBAS-Signal = Farb-Bild-Austast-Synchron-Signal mit Audiosignal (beide im Basisband) vorzugsweise über AV-Kabel (Cinch) oder ein Scartkabel - zugeführt wird. Somit erhalten Komponenten der Hauskommunikationstechnik eine zusätzliche Verwendung. Das TV-Signal kann von einer beliebigen Signalquelle stammen, beispielsweise einem Video- oder DVD-Player/Rekorder, einem SAT-Receiver, einem Kabeltuner, einem PC, einer Überwachungskamera oder dergleichen. Um ein komfortables fernsehen zu ermöglichen, kann das Display entsprechend größer ausgelegt sein, als dies bei bekannten Video-Wohnungsstationen bisher üblich war.

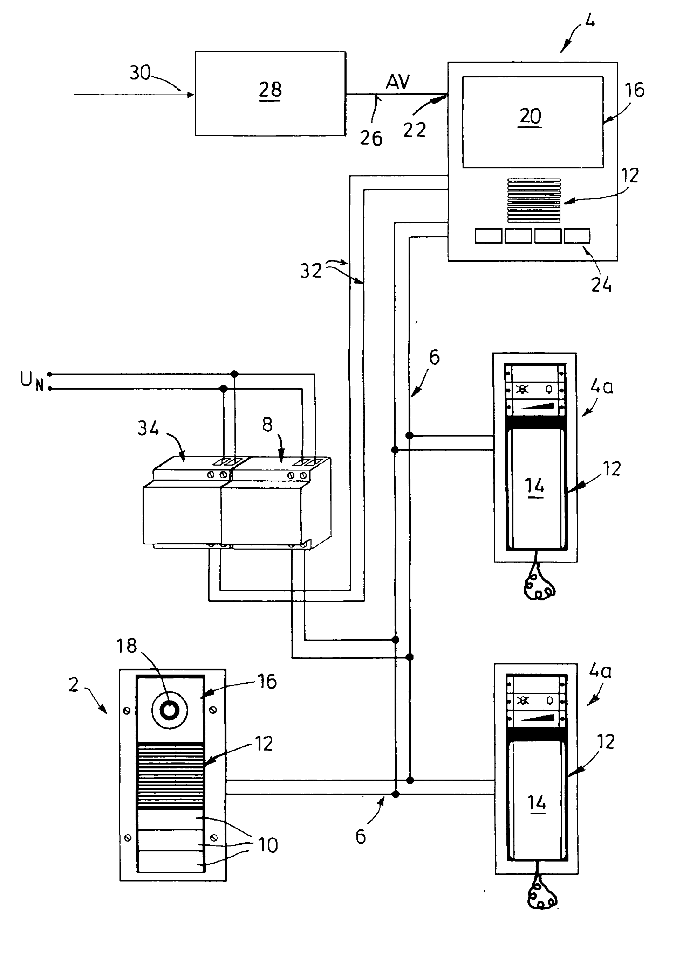

Anhand der Zeichnung soll die Erfindung beispielhaft erläutert werden. Dabei zeigt die einzige Zeichnungsfigur eine schematische, blockschaltbildartige Darstellung eines möglichen Aufbaus einer erfindungsgemäßen Hauskommunikationsanlage beispielhaft mit drei Wohnungsstationen, von denen eine erfindungsgemäß mit TV-Funktion ausgebildet ist.

Eine erfindungsgemäße Hauskommunikationsanlage besteht aus mindestens einer Türstation 2 und einer beliebigen Anzahl von Wohnungsstationen 4, 4a (mindestens eine). Im dargestellten Beispiel weist die Anlage eine erfindungsgemäße Video-Wohnungsstation 4 und zwei Audio-Wohnungsstationen 4a auf. Die Türstation 2 wird in aller Regel im äußeren Eingangsbereich eines Hauses in der Nähe einer Haustür installiert. Die Wohnungsstationen 4, 4a werden jeweils innerhalb einer Wohnung, insbesondere im inneren Eingangsbereich angeordnet. Alle Stationen 2, 4, 4a sind oder werden über einen gemeinsamen Zweidraht-Bus 6 miteinander verbunden. Weiterhin ist ein Bussteuergerät 8 an den Bus 6 angeschlossen. Dieses Bussteuergerät 8 kann in einer zentralen Elektroverteilung des Hauses untergebracht und dort an eine Netzspannung U_{N} angeschlossen sein.

Die Türstation 2 weist eine bestimmte Anzahl von Ruftasten 10 auf, die den vorhandenen Wohnungsstationen 4, 4a zuzuordnen sind. Dies erfolgt in einem Inbetriebnahmeverfahren durch Abspeicherung von bestimmten digitalen Adress-Codes. Dazu kann auf die DE 102 53 308 B4 verwiesen werden.

Der Bus 6 ist zur Übertragung von digitalen Steuersignalen und Kommunikationssignalen, und zwar Audio- und Videosignalen, ausgelegt und überträgt bevorzugt zusätzlich auch die Versorgungsspannung von einem Netzteil im Steuergerät 8 an die einzelnen Stationen 2, 4 und 4a.

Zur Audio-Sprechkommunikation weisen alle Stationen einen Audioteil 12 auf, der zum Freisprechen/Freihören ausgelegt (beispielhaft bei der Türstation 2 und der Wohnungsstation 4) oder mit einem Telefon-Hörer 14 ausgestattet sein kann (beispielhaft bei den reinen Audiostationen 4a). Die Türstation 2 und die Wohnungsstation 4 weisen zusätzlich jeweils einen Videoteil 16 auf, wobei der Videoteil 16 der Türstation 2 eine Videokamera 18 und der Videoteil 16 der Wohnungsstation 4 ein Video-Display 20 vorzugsweise in Form eines TFT- oder LCD-Monitors aufweisen. Die Videokamera 18 bzw. die Türstation 2 ist mit Mitteln zum Erzeugen eines über den Bus 6 zu übertragenden Bus-Videosignals ausgestattet, wobei dieses Videosignal derart frequenzmoduliert ist, dass es außerhalb (oberhalb) einer hörbaren Audio-Frequenz liegt. Dadurch werden Beeinträchtigungen des Audiosignals durch das Videosignal vermieden.

Erfindungsgemäß weist nun die Video-Wohnungsstation 4 einen TV-Eingang 22 zur Einspeisung eines aus Audio- und Videokomponenten bestehenden TV-Signals AV sowie Mittel zum Aktivieren eines Fernsehbetriebes und zur Wiedergabe des TV-Signals AV über den Audioteil 12 und den Videoteil 16 auf. Dabei kann der Fernsehbetrieb manuell über mindestens ein Bedienelement 24 aktiviert und/oder deaktiviert werden. Es ist auch möglich, die Wohnungsstation 4 selbsttätig in den Fernsehbetrieb zu schalten, sobald das TV-Signal AV am TV-Eingang 22 ansteht. Dies kann durch ein entsprechendes Schaltsignal erreicht werden, welches gemeinsam mit dem TV-Signal zugeführt wird. Weiterhin sind vorzugsweise Umschaltmittel zum selbsttätigen Umschalten der Wohnungsstation 4 aus dem Fernsehbetrieb in einen Kommunikationsbetrieb mit der Türstation 2 im Falle eines für diese Wohnungsstation 4 bestimmten Rufsignals von der Türstation 2 vorgesehen.

Wie sich weiterhin aus der Darstellung ergibt, ist der TV-Eingang 22 über eine AV-Verbindung 26 mit einer beliebigen TV-Signalquelle 28 verbunden oder verbindbar. Dabei kann es sich beispielsweise um einen SAT-Receiver, einen DVD-Player/Rekorder, einen Videorekorder, eine Überwachungskamera, einen Rechner (PC) oder auch einen Kabeltuner handeln. Die TV-Signalquelle 28 wird eingangsseitig mit einem Eingangssignal 30 versorgt, beispielsweise einem HF-Signal z. B. im UHF/VHF-Bereich.

In weiterer vorteilhafter Ausgestaltung ist die Video-Wohnungsstation 4 über zusätzlich zum Bus 6 vorhandene Versorgungsleitungen 32 mit einer Zusatz-Spannungsversorgung 34 verbunden oder verbindbar. Diese Maßnahme stellt eine ausreichende Energieversorgung der Wohnungsstation 4 sicher, um auch im Fernsehbetrieb die Kommunikationsfunktionen der übrigen Busstationen 2, 4a zu gewährleisten. Die Wohnungsstation 4 weist für die Versorgungsleitungen 32 entsprechende Eingänge (Anschlüsse) auf sowie geeignete Umschaltmittel, die bei Bedarf zwischen der Bus-Versorgung und der Zusatzversorgung umschalten.

Der TV-Eingang 22 ist unter Umgehung des Videosignal-Demodulators mit dem Videoteil 16 und dem Audioteil 12 verbunden, so dass die Signalkomponenten des TV-Signals wiedergegeben werden können, und zwar die Audiokomponente über den Audioteil 12 und die Videokomponente über den Videoteil 16.

Die Erfindung ist nicht auf die dargestellten und beschriebenen Ausführungsbeispiele beschränkt, sondern umfasst auch alle im Sinne der Erfindung gleichwirkenden Ausführungen. So kann grundsätzlich als TV-Signal auch z. B. ein HF-moduliertes Signal, z. B. im UHF- oder VHF-Bereich, vorhanden sein, wobei dann die Wohnungsstation 4 auch einen entsprechenden Tuner zum Bereitstellen eines AV-Signals aufweist. Ferner ist die Erfindung bislang auch noch nicht auf die im Anspruch 1 bzw. Anspruch 6 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 bzw. Anspruch 6 weggelassen bzw. durch mindestens ein an anderer Stelle der Anmeldung offenbartes Einzelmerkmal ersetzt werden kann. Insofern ist der Anspruch 1 bzw. Anspruch 6 lediglich als ein erster Formulierungsversuch für eine Erfindung zu verstehen.

## Patentansprüche

1. Hauskommunikationsanlage mit mindestens einer Türstation (2) und mindestens einer Wohnungsstation (4, 4a), wobei alle Stationen (2, 4, 4a) über einen gemeinsamen Zweidraht-Bus (6) verbunden oder verbindbar sind, der zur Übertragung von Steuer-, Audio- und Videosignalen ausgelegt ist, wobei die Wohnungsstation (4) einen Audioteil (12) für eine Audio-Kommunikation mit der Türstation (2) sowie einen Videoteil (16) mit einem Display (20) zur Darstellung eines Videobildes einer Videokamera (18) der Türstation (2) anhand eines über den Bus (6) zu übertragenden Videosignals aufweist,
**dadurch gekennzeichnet, dass** die Wohnungsstation (4) einen TV-Eingang (22) zur Einspeisung eines aus Audio- und Videokomponenten bestehenden TV-Signals (AV) sowie Mittel zum Aktivieren eines Fernsehbetriebes und zur Wiedergabe des TV-Signals (AV) über den Audioteil (12) und den Videoteil (16) aufweist.

2. Hauskommunikationsanlage nach Anspruch 1,
**gekennzeichnet durch** Umschaltmittel zum selbsttätigen Umschalten der Wohnungsstation (4) aus dem Fernsehbetrieb in einen Kommunikationsbetrieb mit der Türstation (2) im Falle eines Rufsignals von der Türstation (2).

3. Hauskommunikationsanlage nach Anspruch 1 oder 2,
**dadurch gekennzeichnet, dass** der Fernsehbetrieb manuell über mindestens ein Bedienelement (24) aktivierbar und/oder deaktivierbar ist.

4. Hauskommunikationsanlage nach einem der Ansprüche 1 bis 3,
**dadurch gekennzeichnet, dass** der TV-Eingang (22) über eine AV-Verbindung (26) mit einer TV-Signal-Quelle (28) verbunden oder verbindbar ist.

5. Hauskommunikationsanlage nach einem der Ansprüche 1 bis 4,
**dadurch gekennzeichnet, dass** die Wohnungsstation (4) über Versorgungsleitungen (32) mit einer Zusatz-Spannungsversorgung (34) verbunden oder verbindbar ist.

6. Video-Wohnungsstation (4) für eine Hauskommunikationsanlage insbesondere nach einem der Ansprüche 1 bis 5 und zum Anschluss an einen Zweidraht-Bus (6) zwecks Verbindung zumindest mit einer eine Videokamera (18) aufweisenden Video-Türstation (2), mit einem Audioteil (12) für eine Audio-Kommunikation mit der Türstation (2) sowie mit einem Videoteil (16) mit einem Display (20) zur Darstellung eines Videobildes der Videokamera (18) der Türstation (2) anhand eines über den Bus (6) zu übertragenden Videosignals,
**gekennzeichnet durch** einen TV-Eingang (22) zur Einspeisung eines aus Audio- und Videokomponenten bestehenden TV-Signals (AV) sowie **durch** Mittel zum Aktivieren eines Fernsehbetriebes und zur Wiedergabe des TV-Signals (AV) über den Audioteil (12) und den Videoteil (16).

7. Wohnungsstation nach Anspruch 6,
**gekennzeichnet durch** mindestens eines der kennzeichnenden Merkmale der Ansprüche 2 bis 5.
